# EUROPEAN PATENT APPLICATION

(11) **EP 4 717 415 A1**
(43) Date of publication of application: **01.04.2026**
(21) Application number: 24861724.3
(22) Date of filing: 30.07.2024
(51) Int. Cl.: B25J 9/16

(54) **CONTROL SYSTEM AND METHOD FOR MOBILE MANIPULATION ROBOT**

(30) Priority: 04.09.2023 CN 202311126771
(71) Applicant: Shanghai Sage Intelligent Technology Co., Ltd., Shanghai 200240 (CN)
(72) Inventor: ZHANG, Jianzheng, Shanghai 200240 (CN); DONG, Yi, Shanghai 200240 (CN); WEI, Kun, Shanghai 200240 (CN); ZOU, Jinpei, Shanghai 200240 (CN); LI, Lianghua, Shanghai 200240 (CN); LI, Fangbao, Shanghai 200240 (CN)
(74) Representative: Monteiro Alves, Inês
(86) International application number: PCT/CN2024/108332
(87) International publication number: WO 2025/050879

(57) **Abstract**

A control system and method for a mobile manipulation robot. The control system for a mobile manipulation robot comprises: a mobile manipulation robot controller, a locomotion control module, an integrated control module, a trajectory planning module, a trajectory decomposing and calculating module, an inverse kinematics model, and a decoupling and calculating module, wherein the locomotion control module is configured to control movement of a mobile manipulation robot body in a locomotion control mode; the integrated control module is configured to coordinate and control the movement of the mobile manipulation robot body and motion of a manipulator in an integrated control mode; the trajectory planning module is configured to receive a task instruction from the mobile manipulation robot controller and plan a trajectory; the trajectory decomposing and calculating module is configured to decompose the planned trajectory outputted by the trajectory planning module; the inverse kinematics model is configured to solve modeling descriptions of the locomotion control module and the integrated control module; and the decoupling and calculating module is configured to decouple an amount of output of the modeling description of the integrated control module solved by the inverse kinematics model into an amount of motion.

## Description

### TECHNICAL FIELD

The present invention relates to the technical field of intelligent robot control, and particularly relates to a control system and a control method for a mobile manipulation robot.

### BACKGROUND ART

In the field of intelligent manufacturing, the application of intelligent mobile manipulation robots is becoming more and more widespread. In most cases, a mobile manipulation robot serves as a part of a production process, and an operation response speed, operation efficiency, motion standardization, and other aspects of the mobile manipulation robot must meet a production takt and requirements of an automatic production system so as to realize continuous production, which imposes high requirements on the performance of the robot.

A product form of the mobile manipulation robot is mostly a structural form in which a mechanical arm is mounted on a mobile chassis. However, in terms of internal control, a condition in which chassis control and mechanical arm control are still performed separately is maintained. A controller of a whole mobile manipulation robot sends control instructions respectively to the chassis controller and the mechanical arm controller. An underlying logic of the control is not performed from an overall level of the mobile manipulation robot, but a mobile chassis is first controlled to move to a target position and stop, and then a mechanical arm is controlled to operate a target object. This control implementation method is simple, and product development is rapid. However, shortcomings thereof are also very obvious. The shortcomings are mainly that synchronized and coordinated integrated control is not implemented between robot movement and mechanical arm actions, the coordination of operation actions of the robot is poor, efficiency is low, and in some scenarios, a takt requirement of an automatic production line cannot be met.

### SUMMARY

In order to realize integrated control of a whole machine and improve motion coordination and operation efficiency of a mobile manipulation robot, a control system and a control method for a mobile manipulation robot are disclosed in the present invention. A technical solution of the present invention is implemented as follows.

A control system for a mobile manipulation robot is provided, including a mobile manipulation robot controller, a walking control module, an integrated control module, a trajectory planning module, a trajectory decomposition calculation module, an inverse kinematics model, and a decoupling calculation module.

The walking control module is configured to control the movement of a mobile manipulation robot body under a walking control mode.

The integrated control module is configured to coordinate the control of the movement of the mobile manipulation robot body and the movement of a mechanical arm under an integrated control mode.

The trajectory planning module is configured to receive task instructions of the mobile manipulation robot controller and perform trajectory planning.

The trajectory decomposition calculation module is configured to decompose a planned trajectory output by the trajectory planning module.

The inverse kinematics model is configured to solve the modeling descriptions of the walking control module and the integrated control module.

The decoupling calculation module is configured to decouple an output quantity of a modeling description of the integrated control module solved by the inverse kinematics model into movement quantity.

Preferably, a scene operation algorithm library and a coupling unit are further included, wherein
the scene operation algorithm library includes n actuator algorithm libraries;
each actuator algorithm library is arranged with actuator compensation parameters; and
the coupling unit outputs actuator compensation data to the decoupling calculation module.

Preferably, an error calculation module and an artificial neural network algorithm module are further included, wherein
the error calculation module calculates an error between a body movement quantity and an actual body movement quantity;
the artificial neural network algorithm module is configured to calculate an error quantity between a movement quantity of a joint of a mechanical arm and an actual movement quantity of each joint of the mechanical arm, or configured to perform learning training on actuator compensation parameters to obtain actuator compensation data.

A control method for a mobile manipulation robot uses a control system for a mobile manipulation robot. The specific steps of the method are as follows:
S1, receiving a task instruction from a scheduling system by a robot controller, and performing a trajectory planning calculation through a trajectory planning module;
S2, performing trajectory planning by the trajectory planning module after receiving the task instruction;
S3, decomposing a planned trajectory of the trajectory planning module into a walking control trajectory and an integrated control trajectory by a trajectory decomposition calculation module, wherein
the integrated control trajectory includes a cooperative walking trajectory and a mechanical arm operation action trajectory;
S4, inputting the walking control trajectory to the walking control module, and inputting the integrated control trajectory to the integrated control module by the trajectory decomposition calculation module; and
S5, automatically switching a control mode by the mobile manipulation robot controller based on data such as the planned trajectory, the current position of the mobile manipulation robot, and the position of an operation object, wherein the control mode includes a walking control mode and an integrated control mode; for example, when a distance between a mobile manipulation robot and an operation object is greater than a range, a walking control mode is switched to; and when a distance between the mobile manipulation robot and the operation object is less than a range, an integrated control mode is switched to:
   S5A, walking control mode:
      S5A.1, performing a modeling description of walking control trajectory data in a robot world coordinate system by the walking control module;
      S5A.2, generating navigation walking instructions of a walking device of the mobile manipulation robot through solving by an inverse kinematics model;
      S5A.3, inputting the navigation walking instructions to a walking wheel driver;
      S5A.4, performing internal closed-loop control based on PID by the walking wheel driver;
   S5B, integrated control mode:
      S5B.1, performing a modeling description of mechanical arm operation action trajectory data and cooperative walking trajectory data in a Cartesian coordinate space by an integrated control trajectory module;
      S5B.2, entering a decoupling calculation module after solving through the inverse kinematics model;
      S5B.3, decoupling an output quantity of the inverse kinematics model into a body movement quantity of the mobile manipulation robot and action movement quantities of each joint of a mechanical arm by the decoupling calculation module;
      S5B.4, transforming the body movement quantity to a world coordinate system to perform walking control of the mobile manipulation robot, and performing movement control of each joint of the mechanical arm of the mobile manipulation robot based on the action movement quantities of each joint of the mechanical arm.

Preferably, the method further includes: S6, performing motion compensation:
S6.A1, calculating an error between a body movement quantity and an actual body movement quantity by an error calculation module, and calculating an error quantity between a movement quantity of a joint of a mechanical arm and an actual movement quantity of each joint of the mechanical arm;
S6.A2, inputting the error quantities in S6.A1 to an artificial neural network algorithm module for learning training;
S6.A3, extracting variation pattern component values from learning training results through kinematic solving;
S6.A4, applying the variation pattern component values to S5B.1 as compensation of output data.

Preferably, the S6 comprises following steps:
S6.B1, extracting actuator compensation parameters of the actuator algorithm library in the scene operation algorithm library by the coupling unit;
S6.B2, inputting the actuator compensation parameters as actuator compensation data to the decoupling calculation module.

Preferably, the S6 specifically includes:
S6.C1, performing learning training on the actuator compensation parameters in the scene operation algorithm library by an artificial neural network algorithm module to obtain actuator compensation data; and
S6.C2, extracting, by the coupling unit, the actuator compensation data obtained through learning training by the artificial neural network algorithm module, and inputting the actuator compensation data to the decoupling calculation module as motion compensation of the mobile manipulation robot.

According to a distance between a robot and a target object, two control modes are provided in the present invention. Outside a prescribed distance range, a control method of controlling the movement of only a robot body is adopted. Within the range, a control method of performing coordinated control of robot body movement and mechanical arm movement simultaneously is executed. Through a control loop based on coupling and decoupling mechanisms, different compensation algorithms are utilized to realize integrated coordinated control of the robot and improvement of performance.

### BRIEF DESCRIPTION OF DRAWINGS

To further clarify the embodiments of the present invention or the technical solutions in the prior art, the following provides a brief introduction to the drawings that are used in the description of the embodiments or the prior art. It is evident that the drawings described below merely represent an embodiment of the present invention. For those skilled in the art, other drawings can be obtained in accordance with the drawings.
FIG. 1 is a schematic diagram of control modes of a control method for a mobile manipulation robot in one embodiment;
FIG. 2 is a control architecture of a mobile manipulation robot in one embodiment;
FIG. 3 is a control architecture of a mobile manipulation robot in another embodiment;
FIG. 4 is a flowchart of error compensation of a control method for a mobile manipulation robot in one embodiment;
FIG. 5 is a control architecture of a mobile manipulation robot in another embodiment; and
FIG. 6 is a control architecture of a mobile manipulation robot in another embodiment.

### DETAILED DESCRIPTION OF EMBODIMENTS

The technical solutions of the present invention will be clearly and completely described below in connection with the drawings of the present invention. Obviously, the described embodiments are only a part of the embodiments of the present invention and not all of the embodiments. Based on the embodiments of the present invention, all other embodiments obtained by those of ordinary skill in the art without making inventive efforts are within the scope of protection of the present invention.

In one embodiment,
specifically, a control system for a mobile manipulation robot is provided, including: a mobile manipulation robot controller, a walking control module, an integrated control module, a trajectory planning module, a trajectory decomposition calculation module, an inverse kinematics model, and a decoupling calculation module. The walking control module is configured to control a movement of a mobile manipulation robot body under a walking control mode. The integrated control module is configured to coordinate control of the movement of the mobile manipulation robot body and the movement of a mechanical arm under an integrated control mode. The trajectory planning module is configured to receive task instructions of the mobile manipulation robot controller and perform trajectory planning. The trajectory decomposition calculation module is configured to decompose a planned trajectory output by the trajectory planning module. The inverse kinematics model is configured to solve the modeling descriptions of the walking control module and the integrated control module. The decoupling calculation module is configured to decouple an output quantity of a modeling description of the integrated control module solved by the inverse kinematics model into movement quantity.

In one embodiment, a control mode is divided into two types of a walking control mode and an integrated control mode according to the distance between a mobile manipulation robot and a target object.

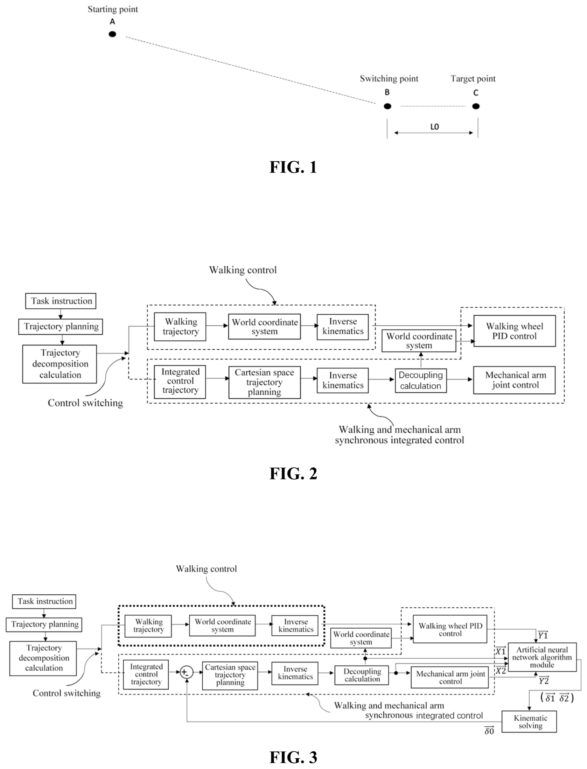

As shown in FIG. 1, it is assumed that the robot is to move from a starting point A to a target point C. When the robot moves to a switching point B, and the distance between the switching point B and the target point C is L0, the point is defined as the control mode switching point B.

During a period from point A to point B, a walking control module controls movement of only a body of the mobile manipulation robot, and a mechanical arm is in a stationary state.

During a period from point B to point C, an integrated control module controls movement of the body of the mobile manipulation robot and the actions of the mechanical arm to work synchronously.

A setting of the control switching point B can be determined according to a movement distance of the mobile manipulation robot, working conditions, actual requirements, or a self-defined setting.

A value of the distance L0 can be set according to obstacles surrounding the target point C and operation requirements, for example, a driving speed of the robot, an operation speed and accuracy of the mechanical arm.

Main advantages of the embodiment are that when the mobile manipulation robot becomes closer to the target point C, coordination and synchronization of mechanical arm actions and chassis movement of the mobile manipulation robot are improved (chassis movement and mechanical arm action are performed simultaneously), and operation speed and efficiency are improved, operation smoothness is improved, and requirements of an automatic production line are better met.

As shown in FIG. 2, a specific control method of the embodiment includes the following steps:
S1, receiving a task instruction from a scheduling system by a robot controller, and performing a trajectory planning calculation through a trajectory planning module;
S2, performing trajectory planning by the trajectory planning module after receiving the task instruction;
S3, decomposing a planned trajectory of the trajectory planning module into a walking control trajectory and an integrated control trajectory by a trajectory decomposition calculation module, wherein
the integrated control trajectory includes a cooperative walking trajectory and a mechanical arm operation action trajectory;
S4, inputting the walking control trajectory to the walking control module, and inputting the integrated control trajectory to the integrated control module by the trajectory decomposition calculation module;
S5, automatically switching a control mode by the mobile manipulation robot controller based on data such as the planned trajectory, the current position of the mobile manipulation robot, and the position of an operation object, wherein the control mode includes a walking control mode and an integrated control mode.

In one embodiment, when a mobile manipulation robot controller determines that the mobile manipulation robot is located between point A and point B, the controller switches to the walking control mode, including the following steps.

S5A, walking control mode:
S5A.1, performing a modeling description of walking control trajectory data in a robot world coordinate system by the walking control module;
S5A.2, generating navigation walking instructions of a walking device of the mobile manipulation robot through solving by an inverse kinematics model;
S5A.3, inputting the navigation walking instructions to a walking wheel driver; and
S5A.4, performing internal closed-loop control based on PID by the walking wheel driver.

When a mobile manipulation robot controller determines that the mobile manipulation robot is located between point B and point C, the controller switches to the integrated control module, including the following steps.

S5B, integrated control mode:
S5B.1, performing a modeling description of mechanical arm operation action trajectory data and cooperative walking trajectory data in a Cartesian coordinate space by an integrated control trajectory module;
S5B.2, entering a decoupling calculation module after solving through the inverse kinematics model;
S5B.3, decoupling an output quantity of the inverse kinematics model into a body movement quantity of the mobile manipulation robot and action movement quantities of each joint of a mechanical arm by the decoupling calculation module;
S5B.4, transforming the body movement quantity to a world coordinate system to perform walking control of the mobile manipulation robot, and performing movement control of each joint of the mechanical arm of the mobile manipulation robot based on the action movement quantities of each joint of the mechanical arm.

In another embodiment,
preferably, a control system for a mobile manipulation robot is provided, including: a mobile manipulation robot controller, a walking control module, an integrated control module, a trajectory planning module, a trajectory decomposition calculation module, an inverse kinematics model, a decoupling calculation module, an error calculation module, and an artificial neural network algorithm module. The walking control module is configured to control a movement of a mobile manipulation robot body under a walking control mode. The integrated control module is configured to coordinate control of the movement of the mobile manipulation robot body and the movement of a mechanical arm under an integrated control mode. The trajectory planning module is configured to receive task instructions of the mobile manipulation robot controller and perform trajectory planning. The trajectory decomposition calculation module is configured to decompose a planned trajectory output by the trajectory planning module. The inverse kinematics model is configured to solve the modeling descriptions of the walking control module and the integrated control module. The decoupling calculation module is configured to decouple an output quantity of a modeling description of the integrated control module solved by the inverse kinematics model into movement quantity. The error calculation module calculates an error between a body movement quantity and an actual body movement quantity. The artificial neural network algorithm module is configured to calculate an error quantity between a movement quantity of a joint of a mechanical arm and an actual movement quantity of each joint of the mechanical arm, or configured to perform learning training on actuator compensation parameters to obtain actuator compensation data.

As shown in FIG. 3, a specific control method of the embodiment includes the following steps:
S1, receiving a task instruction from a scheduling system by a robot controller, and performing a trajectory planning calculation through a trajectory planning module;
S2, performing trajectory planning by the trajectory planning module after receiving the task instruction;
S3, decomposing a planned trajectory of the trajectory planning module into a walking control trajectory and an integrated control trajectory by a trajectory decomposition calculation module, wherein
the integrated control trajectory includes a cooperative walking trajectory and a mechanical arm operation action trajectory;
S4, inputting the walking control trajectory to the walking control module, and inputting the integrated control trajectory to the integrated control module by the trajectory decomposition calculation module;
S5, automatically switching a control mode by the mobile manipulation robot controller based on data such as the planned trajectory, the current position of the mobile manipulation robot, and the position of an operation object, wherein
the control mode includes a walking control mode and an integrated control mode:
   S5A, walking control mode:
      S5A.1, performing a modeling description of walking control trajectory data in a robot world coordinate system by the walking control module;
      S5A.2, generating navigation walking instructions of a walking device of the mobile manipulation robot through solving by an inverse kinematics model;
      S5A.3, inputting the navigation walking instructions to a walking wheel driver;
      S5A.4, performing internal closed-loop control based on PID by the walking wheel driver;
   S5B, integrated control mode:
      S5B.1, performing a modeling description of mechanical arm operation action trajectory data and cooperative walking trajectory data in a Cartesian coordinate space by an integrated control trajectory module;
      S5B.2, entering a decoupling calculation module after solving through the inverse kinematics model;
      S5B.3, decoupling an output quantity of the inverse kinematics model into a body movement quantity of the mobile manipulation robot and action movement quantities of each joint of a mechanical arm by the decoupling calculation module;
      S5B.4, transforming the body movement quantity to a world coordinate system to perform walking control of the mobile manipulation robot, and performing movement control of each joint of the mechanical arm of the mobile manipulation robot based on the action movement quantities of each joint of the mechanical arm;
   S6, performing motion compensation, including:
      S6.A1, calculating an error between a body movement quantity and an actual body movement quantity by an error calculation module, and calculating an error quantity between a movement quantity of a joint of a mechanical arm and an actual movement quantity of each joint of the mechanical arm;
      S6.A2, inputting the error quantities in S6.A1 to an artificial neural network algorithm module for learning training;
      S6.A3, extracting variation pattern component values from learning training results through kinematic solving;
      S6.A4, applying the variation pattern component values to S5.1 as compensation of output data.

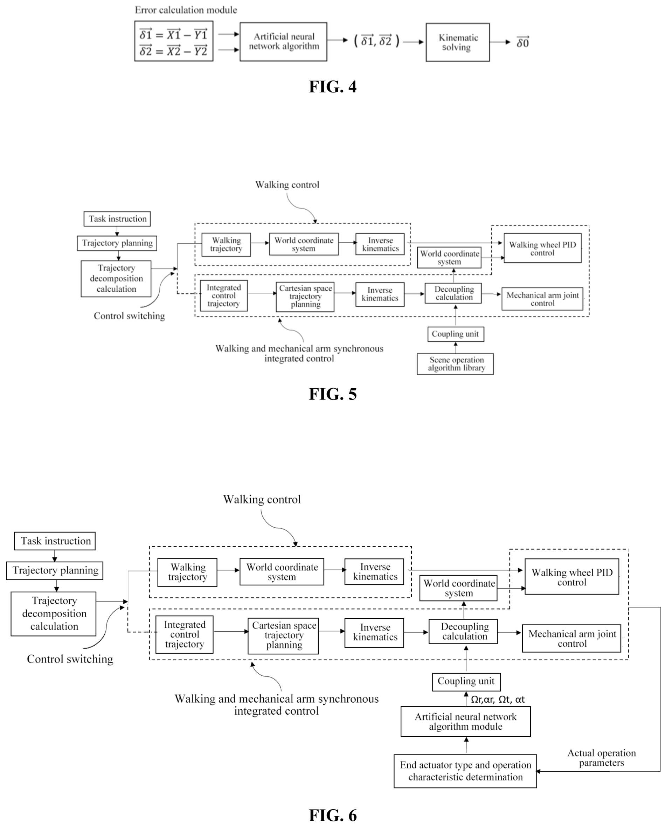

This embodiment is a further optimization of the embodiment above. As shown in FIG. 4, the embodiment calculates respective error quantities by inputting each movement control quantity (instruction) and each actual movement control quantity (feedback) into an error calculation module. Learning of the artificial neural network algorithm is performed on the error quantity data, and variation pattern component values are extracted through kinematic solving. The variation pattern component values are coupled at a front end before outputting operation action trajectory data and cooperative walking trajectory data by a trajectory decomposition calculation module, so as to function as compensation for final errors.

In FIG. 4, the physical meanings of symbols in the figure are as follows:
*̅X̅*̅1̅, *̅X̅*̅2̅: robot walking instruction parameters and mechanical arm end joint actuator action instruction parameters;
*̅Y̅*̅1̅, *̅Y̅*̅2̅: actual robot walking parameters and actual mechanical arm end joint actuator action parameters;
*̅δ̅*̅1̅, *̅δ̅*̅2̅: robot walking error parameters and mechanical arm end joint actuator action error parameters; and
*̅δ̅*̅0̅: output compensation quantities.

Compared with the embodiment above, the beneficial effects of this embodiment are that the operation accuracy and operation stability of the mechanical arm end are improved.

In another embodiment,
preferably, a control system for a mobile manipulation robot is provided, including: a mobile manipulation robot controller, a walking control module, an integrated control module, a trajectory planning module, a trajectory decomposition calculation module, an inverse kinematics model, a decoupling calculation module, a scene operation algorithm library, and a coupling unit. The walking control module is configured to control a movement of a mobile manipulation robot body under a walking control mode. The integrated control module is configured to coordinate control of the movement of the mobile manipulation robot body and the movement of a mechanical arm under an integrated control mode. The trajectory planning module is configured to receive task instructions of the mobile manipulation robot controller and perform trajectory planning. The trajectory decomposition calculation module is configured to decompose a planned trajectory output by the trajectory planning module. The inverse kinematics model is configured to solve the modeling descriptions of the walking control module and the integrated control module. The decoupling calculation module is configured to decouple an output quantity of a modeling description of the integrated control module solved by the inverse kinematics model into movement quantity.

The scene operation algorithm library includes n actuator algorithm libraries, where n is the total number of all actuators of a mobile manipulation robot. Each actuator algorithm library is arranged with actuator compensation parameters. The coupling unit outputs actuator compensation data to the decoupling calculation module.

As shown in FIG. 5, a specific control method of the embodiment includes the following steps:
S1, receiving a task instruction from a scheduling system by a robot controller, and performing a trajectory planning calculation through a trajectory planning module;
S2, performing trajectory planning by the trajectory planning module after receiving the task instruction;
S3, decomposing a planned trajectory of the trajectory planning module into a walking control trajectory and an integrated control trajectory by a trajectory decomposition calculation module, wherein
the integrated control trajectory includes a cooperative walking trajectory and a mechanical arm operation action trajectory;
S4, inputting the walking control trajectory to the walking control module, and inputting the integrated control trajectory to the integrated control module by the trajectory decomposition calculation module;
S5, automatically switching a control mode by the mobile manipulation robot controller based on data such as the planned trajectory, the current position of the mobile manipulation robot, and the position of an operation object, wherein
the control mode includes a walking control mode and an integrated control mode;
S5A, walking control mode:
   S5A.1, performing a modeling description of walking control trajectory data in a robot world coordinate system by the walking control module;
   S5A.2, generating navigation walking instructions of a walking device of the mobile manipulation robot through solving by an inverse kinematics model;
   S5A.3, inputting the navigation walking instructions to a walking wheel driver;
   S5A.4, performing internal closed-loop control based on PID by the walking wheel driver;
S5B, integrated control mode:
   S5B.1, performing a modeling description of mechanical arm operation action trajectory data and cooperative walking trajectory data in a Cartesian coordinate space by an integrated control trajectory module;
   S5B.2, entering a decoupling calculation module after solving through the inverse kinematics model;
   S5B.3, decoupling an output quantity of the inverse kinematics model into a body movement quantity of the mobile manipulation robot and action movement quantities of each joint of a mechanical arm by the decoupling calculation module;
   S5B.4, transforming the body movement quantity to a world coordinate system to perform walking control of the mobile manipulation robot, and performing movement control of each joint of the mechanical arm of the mobile manipulation robot based on the action movement quantities of each joint of the mechanical arm;
S6, performing motion compensation, including:
   S6.B1, extracting actuator compensation parameters of the actuator algorithm library in the scene operation algorithm library by the coupling unit;
   S6.B2, inputting the actuator compensation parameters as actuator compensation data to the decoupling calculation module.

In this embodiment, further improvement is performed on the above embodiment. In order to enable a mobile manipulation robot to better adapt to the operation requirements of a scene where the robot is located, this embodiment establishes a scene operation algorithm library. After an actuator algorithm library in the scene operation algorithm library is selected, a coupling unit couples parameters of the actuator algorithm library into a decoupling calculation module, thereby enhancing action execution efficiency and performance of the robot and reducing requirements for computing resources of a control system.

The scene operation algorithm library is mainly determined by the type of a robot end actuator and operation characteristics, and an optimized coupling control quantity is designed so that a final end execution operation action better meets operation requirements.

A table below is an example of the scene operation algorithm library.

| Serial No. | Algorithm library name | End actuator type | Operation characteristic | Body movement speed compensation Ωr | Body movement acceleration compensation αr | End action speed compensationωt | End action acceleration compensation αt |
|---|---|---|---|---|---|---|---|
| 1 | module_hand1 | Three-jaw gripper | High-rigidity gripping | Ωr1 | αr1 | Ωt1 | αt1 |
| 2 | module_hand2 | Two-jaw gripper | Low-rigidity gripping | Ωr2 | αr2 | Ωt2 | αt2 |
| 3 | module_hand3 | Force gripper | Flexible gripping | Ωr3 | αr3 | Ωt3 | αt3 |
| 4 | module_hand4 | Suction cup | Heavy-load suction operation | Ωr4 | αr4 | Ωt4 | αt4 |
| 5 | ... | | | | | | |

Four actuator algorithm libraries are listed in the table. They are module_hand1, module_hand2, module_hand3, and module_hand4. Each actuator algorithm library corresponds to a different type of end actuator and has respective operation characteristics. Four parameters are included, namely the movement speed and acceleration of a robot body, and the speed and acceleration of an end actuator. According to control requirements, types and quantities of parameters corresponding to modules in the algorithm library can be increased or decreased.

After an actuator algorithm library is selected, four parameters of the actuator algorithm library are coupled into the decoupling calculation module. In the decoupling calculation module, parameters of the actuator algorithm library related to body movement of the mobile manipulation robot are decoupled into actuator control quantities of body movement, and parameters of the actuator algorithm library related to the mechanical arm are decoupled into actuator control quantities of the mechanical arm body. These parameters are coupled with the original respective control quantities to form new control quantities so as to correct actual control effects.

Under different operation characteristics, requirements for action speed, acceleration, and other aspects of the robot body and the end actuator of the mechanical arm are different. Each module outputs four parameters respectively. The four parameters correspond to compensation quantities. The compensation quantities are coupled into the decoupling calculation unit to influence the movement performance of the corresponding robot body and the execution performance of the end actuator of the mechanical arm, thereby adaptively correcting control performance. This design reduces the requirements of robot actions for advanced algorithms, which can rapidly adapt and improve the operational effects and performance of the robot when executing corresponding operations. It should be noted that the four parameters are only an example. In actual operation, more compensation parameters can be arranged to further improve the control accuracy of the mobile manipulation robot.

In another embodiment,
preferably, a control system for a mobile manipulation robot is provided, including: a mobile manipulation robot controller, a walking control module, an integrated control module, a trajectory decomposition calculation module, an inverse kinematics model, a decoupling calculation module, a scene operation algorithm library, a coupling unit, and an artificial neural network algorithm module. The walking control module is configured to control a movement of a mobile manipulation robot body under a walking control mode. The integrated control module is configured to coordinate control of the movement of the mobile manipulation robot body and the movement of a mechanical arm under an integrated control mode. The trajectory planning module is configured to receive task instructions of the mobile manipulation robot controller and perform trajectory planning. The trajectory decomposition calculation module is configured to decompose a planned trajectory output by the trajectory planning module. The inverse kinematics model is configured to solve the modeling descriptions of the walking control module and the integrated control module. The decoupling calculation module is configured to decouple an output quantity of a modeling description of the integrated control module solved by the inverse kinematics model into movement quantity.

The scene operation algorithm library includes n actuator algorithm libraries, where n is the total number of all actuators of a mobile manipulation robot. Each actuator algorithm library is arranged with actuator compensation parameters. The coupling unit outputs actuator compensation data to the decoupling calculation module. The artificial neural network algorithm module is configured to perform learning training on actuator compensation parameters to obtain actuator compensation data.

As shown in FIG. 6, a specific control method of the embodiment includes the following steps:
S1, receiving a task instruction from a scheduling system by a robot controller, and performing a trajectory planning calculation through a trajectory planning module;
S2, performing trajectory planning by the trajectory planning module after receiving the task instruction;
S3, decomposing a planned trajectory of the trajectory planning module into a walking control trajectory and an integrated control trajectory by a trajectory decomposition calculation module, wherein
the integrated control trajectory includes a cooperative walking trajectory and a mechanical arm operation action trajectory;
S4, inputting the walking control trajectory to the walking control module, and inputting the integrated control trajectory to the integrated control module by the trajectory decomposition calculation module;
S5, automatically switching a control mode by the mobile manipulation robot controller based on data such as the planned trajectory, the current position of the mobile manipulation robot, and the position of an operation object, wherein
the control mode includes a walking control mode and an integrated control mode:
   S5A, walking control mode:
      S5A.1, performing a modeling description of walking control trajectory data in a robot world coordinate system by the walking control module;
      S5A.2, generating navigation walking instructions of a walking device of the mobile manipulation robot through solving by an inverse kinematics model;
      S5A.3, inputting the navigation walking instructions to a walking wheel driver;
      S5A.4, performing internal closed-loop control based on PID by the walking wheel driver;
   S5B, integrated control mode:
      S5B.1, performing a modeling description of mechanical arm operation action trajectory data and cooperative walking trajectory data in a Cartesian coordinate space by an integrated control trajectory module;
      S5B.2, entering a decoupling calculation module after solving through the inverse kinematics model;
      S5B.3, decoupling an output quantity of the inverse kinematics model into a body movement quantity of the mobile manipulation robot and action movement quantities of each joint of a mechanical arm by the decoupling calculation module;
      S5B.4, transforming the body movement quantity to a world coordinate system to perform walking control of the mobile manipulation robot, and performing movement control of each joint of the mechanical arm of the mobile manipulation robot based on the action movement quantities of each joint of the mechanical arm;
   S6, performing motion compensation, including:
      S6.C1, performing learning training on the actuator compensation parameters in the scene operation algorithm library by an artificial neural network algorithm module to obtain actuator compensation data; and
      S6.C2, extracting, by the coupling unit, the actuator compensation data obtained through learning training by the artificial neural network algorithm module, and inputting the actuator compensation data to the decoupling calculation module as motion compensation of the mobile manipulation robot.

In this embodiment, further improvement is performed on the above embodiment. In one embodiment, the actual operation parameters are input into an end actuator type and operation characteristic determination module to perform processing, including characteristic data calibration, characteristic data filtering, or expression correction. After the processing, characteristic data corresponding to a scene operation algorithm library is obtained, and the characteristic data is input into an artificial neural network learning module. Four parameters of the module algorithm library are used as weight factors in the neural network algorithm to perform data training, iteration, and calculation on actual operation data, and the coupling compensation data is finally obtained. The coupling compensation data enters a main control loop through a coupling unit to perform compensation so as to achieve enhancement of control effects.

This embodiment enhances operation stability and accuracy, and other performance during integrated control. At the same time, the walking of the mobile manipulation robot and operation actions of the mechanical arm become smoother, and walking and operation actions are completed continuously without the need, as in traditional non-integrated control methods, to readjust or repeatedly adjust a robot pose when approaching or reaching an operation target so as to execute an end action more smoothly.

It should be noted that the above description is only a preferred embodiment of the present invention and is not intended to limit the present invention. Any modification, equivalent replacement, or improvement made within the spirit and principle of the present invention shall fall within the protection scope of the present invention.

## Claims

1. A control system for a mobile manipulation robot, **characterized by** comprising a mobile manipulation robot controller, a walking control module, an integrated control module, a trajectory planning module, a trajectory decomposition calculation module, an inverse kinematics model, and a decoupling calculation module, wherein
the walking control module is configured to control a movement of a mobile manipulation robot body under a walking control mode;
the integrated control module is configured to coordinate control of movement of the mobile manipulation robot body and movement of a mechanical arm under an integrated control mode;
the trajectory planning module is configured to receive task instructions of the mobile manipulation robot controller and perform trajectory planning;
the trajectory decomposition calculation module is configured to decompose a planned trajectory output by the trajectory planning module;
the inverse kinematics model is configured to solve modeling descriptions of the walking control module and the integrated control module; and
the decoupling calculation module is configured to decouple an output quantity of a modeling description of the integrated control module solved by the inverse kinematics model into movement quantity.

2. The control system for a mobile manipulation robot according to claim 1, further comprising a scene operation algorithm library and a coupling unit, wherein
the scene operation algorithm library comprises n actuator algorithm libraries;
each actuator algorithm library is arranged with actuator compensation parameters; and
the coupling unit outputs actuator compensation data to the decoupling calculation module.

3. The control system for a mobile manipulation robot according to claim 1 or 2, further comprising an error calculation module and an artificial neural network algorithm module, wherein
the error calculation module calculates an error between a body movement quantity and an actual body movement quantity; and
the artificial neural network algorithm module is configured to calculate an error quantity between a movement quantity of a joint of a mechanical arm and an actual movement quantity of each joint of the mechanical arm, or configured to perform learning training on actuator compensation parameters to obtain actuator compensation data.

4. A control method for a mobile manipulation robot, **characterized in that** the control method uses the control system for a mobile manipulation robot according to claim 3, and specific steps of the control method are as follows:
S1, receiving a task instruction from a scheduling system by a robot controller, and performing a trajectory planning calculation through a trajectory planning module;
S2, performing trajectory planning by the trajectory planning module after receiving the task instruction;
S3, decomposing a planned trajectory of the trajectory planning module into a walking control trajectory and an integrated control trajectory by a trajectory decomposition calculation module, wherein
the integrated control trajectory comprises a cooperative walking trajectory and a mechanical arm operation action trajectory;
S4, inputting the walking control trajectory to the walking control module, and inputting the integrated control trajectory to the integrated control module by the trajectory decomposition calculation module;
S5, automatically switching a control mode by the mobile manipulation robot controller based on the planned trajectory, a current position of the mobile manipulation robot, and a position of an operation object, wherein
the control mode comprises a walking control mode and an integrated control mode;
S5A, walking control mode:
S5A.1, performing a modeling description of walking control trajectory data in a robot world coordinate system by the walking control module;
S5A.2, generating navigation walking instructions of a walking device of the mobile manipulation robot through solving by an inverse kinematics model;
S5A.3, inputting the navigation walking instructions to a walking wheel driver; and
S5A.4, performing internal closed-loop control based on PID by the walking wheel driver;
S5B, integrated control mode:
S5B.1, performing a modeling description of mechanical arm operation action trajectory data and cooperative walking trajectory data in a Cartesian coordinate space by an integrated control trajectory module;
S5B.2, entering a decoupling calculation module after solving through the inverse kinematics model;
S5B.3, decoupling an output quantity of the inverse kinematics model into a body movement quantity of the mobile manipulation robot and action movement quantities of each joint of a mechanical arm by the decoupling calculation module; and
S5B.4, transforming the body movement quantity to a world coordinate system to perform walking control of the mobile manipulation robot, and performing movement control of each joint of the mechanical arm of the mobile manipulation robot based on the action movement quantities of each joint of the mechanical arm.

5. The control method for a mobile manipulation robot according to claim 4, further comprising S6, performing motion compensation.

6. The control method for a mobile manipulation robot according to claim 5, wherein the S6 comprises following steps:
S6.A1, calculating an error between a body movement quantity and an actual body movement quantity by an error calculation module, and calculating an error quantity between a movement quantity of a joint of a mechanical arm and an actual movement quantity of each joint of the mechanical arm;
S6.A2, inputting the error quantities in S6.A1 to an artificial neural network algorithm module for learning training;
S6.A3, extracting variation pattern component values from learning training results through kinematic solving; and
S6.A4, applying the variation pattern component values to S5B.1 as compensation of output data.

7. The control method for a mobile manipulation robot according to claim 5, wherein the S6 comprises following steps:
S6.B1, extracting actuator compensation parameters of an actuator algorithm library in a scene operation algorithm library by a coupling unit; and
S6.B2, inputting the actuator compensation parameters as actuator compensation data to the decoupling calculation module.

8. The control method for a mobile manipulation robot according to claim 5, wherein the S6 comprises following steps:
S6.C1, performing learning training on actuator compensation parameters in a scene operation algorithm library by an artificial neural network algorithm module to obtain actuator compensation data; and
S6.C2, extracting, by a coupling unit, the actuator compensation data obtained through learning training by the artificial neural network algorithm module, and inputting the actuator compensation data to the decoupling calculation module as motion compensation of the mobile manipulation robot.
